# EUROPEAN PATENT APPLICATION

(11) **EP 1 283 619 A2**
(43) Date of publication of application: **12.02.2003**
(21) Application number: 02017074.2
(22) Date of filing: 29.07.2002
(51) Int. Cl.: H04L 12/24

(54) **Method of providing appropriate configuration information for communication application programs**

(30) Priority: 08.08.2001 JP 2001241205
(71) Applicant: Kabushiki Kaisha Toshiba, Tokyo (JP)
(72) Inventor: Ishibashi, Yasuhiro, 1-chome, Minato-ku, Tokyo 105-8001 (JP)
(74) Representative: Henkel, Feiler, Hänzel

(57) **Abstract**

An Internet service provider (ISP) writes appropriate configuration information (ACI) for communication applications into an access point (AP) (2) and delivers to the user the access point (AP) (2) into which the appropriate configuration information (ACI) for communication applications has been incorporated.

## Description

This invention relates to a method of providing appropriate configuration information for communication application programs applied to a service providing system where a server unit of a carrier that provides, for example, Internet access service and the terminal unit of each user who uses the access service are connected via a relay unit installed on the user side.

In recent years, personal computers have been provided with a communication function that enables the user to access the Internet easily, transmit and receive electronic mail, and browse web pages.

To access the Internet from home, it is necessary to make a contact with an Internet service provider (ISP), acquire the necessary information to access the Internet, including the user ID, mail account, and mail server determined for each user by the ISP and the necessary information (application configuration information) to set communication application programs, including a web browsing application and a mail application, and set these pieces of information in the communication application programs.

Such application configuration information has been normally transmitted in the form of a manual. While reading the manual, the user performs connection setting for the web browsing application, mail application, and other software on the personal computer.

Because there is a great difference in knowledge between users, the setting work is difficult for beginners. When the user fails in setting, he or she contacts the ISP's support center and does the setting, following the instructions from the support center. This has not only imposed additional troublesome work on the user but also imposed on the ISP a significant burden of making preparations for such support.

It is accordingly an object of the present invention to provide a method of providing appropriate configuration information for communication application programs capable of decreasing the burden of operation on the user remarkably in setting application setting information in communication application programs, including a web browsing application and a mail application.

According to a first aspect of the present invention, there is provided a method of setting up a network configuration information for a user to connect a user's terminal to a network, comprising: preparing the appropriate configuration information for each user; storing the prepared appropriate configuration information into a storage unit included in the relay unit; and delivering to each user the relay unit in which the appropriate configuration information is stored.

According to a second aspect of the present invention, there is provided a method of setting up a network configuration information for a user to connect a user's terminal to a network, comprising: preparing the appropriate configuration information for each user; storing the prepared appropriate configuration information and an upload program that upload the appropriate configuration information to the relay unit into a portable storage medium; and delivering to each user the storage medium in which the appropriate configuration information is stored.

According to a third aspect of the present invention, there is provided a method of setting up a network configuration information for a user to connect a user's terminal to a network, comprising: preparing the appropriate configuration information for each user; and transferring the prepared appropriate configuration information to the relay unit of each user via a network.

According to a fourth aspect of the present invention, there is provided a method of setting up a network configuration information for a user to connect a user's terminal to a network, comprising: preparing the appropriate configuration information for each user and storing the information into a storage medium included in the server unit; storing into a storage unit included in the relay unit an install program that acquiring the appropriate configuration information stored in the server unit via a network and executes the appropriate configuration by using the acquired appropriate configuration information; and delivering to each user the relay unit in which the install program is stored.

According to a fourth aspect of the present invention, there is provided a method of setting up a network configuration information for a user to connect a user's terminal to a network, comprising: preparing the configuration information for a user to connect a user's terminal to a network; storing the configuration information into a storage unit provided into the relay unit; delivering the relay unit in which the configuration information is stored to each user; and
setting up the user's terminal based on the contents of the configuration information stored in the relay unit.

The methods of providing appropriate configuration information according to the present invention enable novice users to use a communication application program easily, such as a web browsing application or a mail application, without doing troublesome work.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of a personal computer (PC) used as a communication terminal in an embodiment of the present invention;
FIG. 2 is a block diagram showing the configuration of an access point (AP) used as a network relay unit in the embodiment;
FIG. 3 is an explanatory diagram for a first embodiment of the present invention;
FIG. 4 is a flowchart to help explain the procedure for processing in the first embodiment;
FIG. 5 is an explanatory diagram for a second embodiment of the present invention;
FIG. 6 is a flowchart to help explain the procedure for processing in the second embodiment;
FIG. 7 is an explanatory diagram for a third embodiment of the present invention;
FIG. 8 is a flowchart to help explain the procedure for processing in the third embodiment;
FIG. 9 is an explanatory diagram for a fourth embodiment of the present invention; and
FIG. 10 is a flowchart to help explain the procedure for processing in the fourth embodiment.

Hereinafter, referring to the accompanying drawings, embodiments of the present invention will be explained.

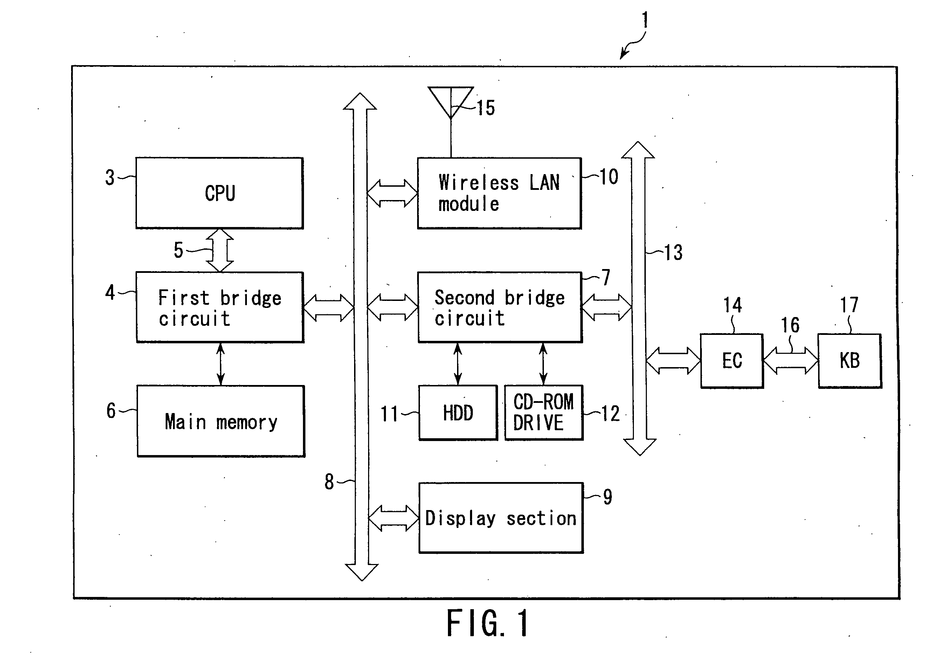

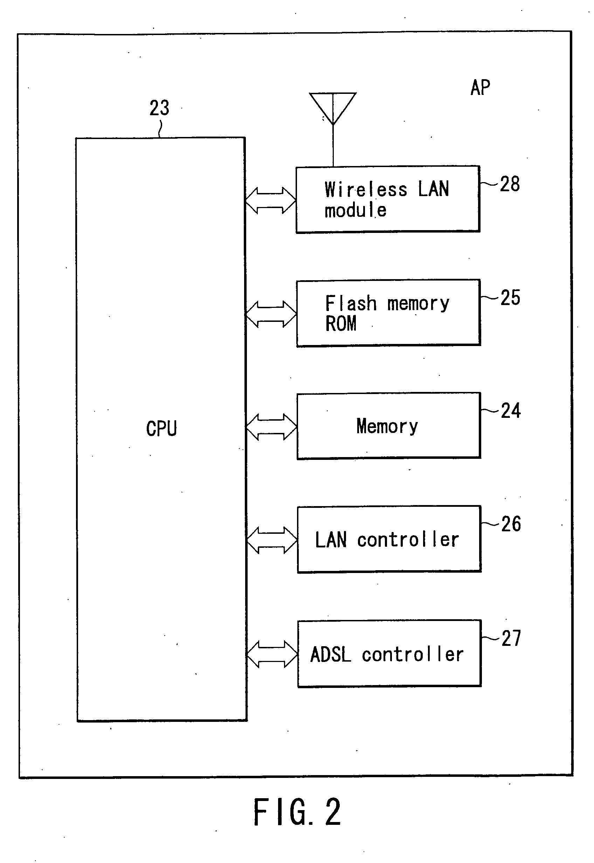

FIGS. 1 and 2 show the configuration of main parts of a system which is applied a method of providing appropriate configuration information related to the present invention. FIG. 1 is a block diagram showing the configuration of a communication terminal used by the user. FIG. 2 is a block diagram showing the configuration of an access point acting as a network relay unit used by the user.

It is assumed that a communication terminal, such as a personal computer (PC) 1 shown in FIG. 1, has the function of, when establishing communication with an access point (AP) 2 serving as a network relay unit shown in FIG. 2, downloading the configuration information for mail and browser applications previously stored in the access point (AP) 2 from the access point (AP) 2, reflecting the information in communication applications, and thereby enabling the mail and browser applications to be used (if this function is absent, the Internet Service Provider (ISP) or the maker is assumed to provide a software application for realizing the same function).

After the user makes a contract with an ISP, the ISP provides the user with the access point (AP) 2 as a device that enables the user to access an external network (public telecommunication network) from home.

The access point (AP) 2 includes at least communication means capable of communicating with the personal computer (PC) 1 serving as a communication terminal and means for accessing an external network.

For example, means for connecting with the personal computer (PC) 1 is wireless communication means (e.g., 802.11b, Bluetooth, or 802.11a). Means for communicating with an external network is cable communication means (e.g., ADSL or telephone circuits).

After making a contract with the user, the ISP prepares appropriate configuration information (ACI) for communication applications for the access point (AP) provided for the user. The appropriate configuration information includes the address of the mail server, the mail address for the user, the connection point of the ISP, the default homepage address, and the user name. The ISP stores the appropriate configuration information (ACI) in an internal memory (in the embodiment, a flash ROM) and delivers it to the user (in the first embodiment). Alternatively, the ISP prepares appropriate configuration information (ACI) for the communication application and sends to the user the appropriate configuration information (ACI) by use of, for example, a specific storage medium, such as a CD-ROM, floppy disk, or a compact memory card. Then, the appropriate configuration information is written into the flash ROM of the access point (AP) 2 via the user's personal computer (PC) 1, thereby providing the access point (AP) 2 with the appropriate configuration information (ACI) for the communication applications (the second embodiment). Alternatively, the ISP prepares appropriate configuration information (ACI) for the communication applications and transfers the appropriate configuration information (ACI) to the access point (AP) 2 used by the corresponding user via a network. Then, the appropriate configuration information is written into the flash ROM of the access point (AP) 2, thereby providing the access point (AP) 2 with the appropriate configuration information (ACI) for the communication application (the third embodiment). Alternatively, the ISP prepares the appropriate configuration information (ACI) and delivers to the user an access point (AP) 2 in which a program (ACI acquisition requesting program) that reads the appropriate configuration information (ACI) has been installed. The access point (AP) 2, when being turned on, executes the installed program, thereby acquiring the appropriate configuration information (ACI) from the ISP (the fourth embodiment).

The user connects the access point (AP) 2 to be used by the user to an external network (e.g., a telephone circuit, an ADSL circuit, or a cable) and turns on the power supply of the access point (AP) 2 and then the power supply of the personal computer (PC) 1 used by the user.

As a result, the preinstalled program (e.g. CFP:config free protocol) is executed, thereby establishing wireless communication between the personal computer (PC) 1 and the access point (AP) 2. Then, the personal computer (PC) 1 requests the access point (AP) 2 to give appropriate configuration information (ACI) for communication applications. In response to the request, the access point (AP) 2 provides the personal computer (PC) 1 with the appropriate configuration information (ACI) for communication applications.

The personal computer (PC) 1 reflects the appropriate configuration information (ACI) for communication applications obtained from the access point (AP) 2 in the system, thereby accessing the external network, which enables use of the World Wide Web, mail, and other services.

The hardware configuration of the personal computer (PC) 1 is shown in FIG. 1.

In the body of the personal computer (PC) 1, a CPU 3 and a first bridge circuit 4 are connected via a CPU local bus 5 composed of a 64-bit data bus. The first bridge circuit 4 and a main memory 6 are connected via a memory bus.

The first bridge circuit 4 and a second bridge circuit 7 are connected via a high-speed bus 8 composed of a 32-bit data bus. A display section 9 that displays various types of information and a wireless LAN module 10 that modulates and demodulates a wireless signal complying with the IEEE 802.11b standard are connected to the high-speed bus 8. A hard disk drive (HDD) 11 and a CD-ROM drive 12 are connected to the second bridge circuit 7. An embedded controller (EC) 14 is connected to the second bridge circuit 7 via a low-speed bus 13.

The CPU 3 controls the entire operation of the personal computer (PC) 1 and processes the data. The main memory 6 is a memory device that stores an operating system (OS), a device driver, application programs to be executed, processing data, and other data. The main memory 6 is composed of a plurality of DRAMs or the like. In the embodiment, a program (e.g. CFP) for establishing wireless communication with the access point (AP) 2 in the start-up process after turning on the power supply is preinstalled in the main memory 6.

The first bridge circuit 4, which is a bridge LSI that connects the CPU local bus 5 and the high-speed bus 8, functions as one of the bus master devices for the high-speed bus 8. The first bridge circuit 4 has the function of converting the bus width including the data and addresses between the CPU local bus 5 and the high-speed bus 8 and the function of performing access control of the main memory 6 via the memory bus.

The high-speed bus 8 is a synchronous input/output bus, with all of the cycles on the high-speed bus 8 in synchronization with the high-speed bus clock. The high-speed bus 8 has an address/data bus used in a time-division manner.

The wireless LAN module 10 is connected to the high-speed bus 8. The wireless LAN module 10, which modulates and demodulates the wireless data signal comprising according to the IEEE 802.11b standard, conforms to the diversity communication scheme. An antenna 15 serving as an interface for wireless signal transmission and reception is connected to the wireless LAN module 10 via a coaxial cable.

The IEEE 802.11b standard is one of the wireless communication standards that use the 2.4-GHz ISM (Industry Science Medical) band. In the IEEE 802.11b standard, communication can be performed at a maximum communication speed of 11 Mbps, using a direct sequence spread spectrum (DSSS).

Wireless communication with the access point (AP) 2 is established via the wireless LAN module 10.

The second bridge circuit 7 is a bridge LSI that connects the high-speed bus 8 and the low-speed bus 13. The second bridge circuit 7 incorporates an IDE controller, thereby performing input/output control of the HDD 11 and CD-ROM drive 12 connected to the IDE controller.

The hard disk drive (HDD) 11, which is a storage medium for the PC, stores various types of data. The CD-ROM drive 12 is a read/write device for an optical disk.

The embedded controller (EC) 14, which is a bridge LSI that connects the low-speed bus 13 and an I2C bus 16, incorporates a plurality of register groups from and into which the CPU 3 can read and write data. Use of these register groups enables communication between the CPU 3 and the devices on the I2C bus 16. The embedded controller 14 also functions as a keyboard controller and is connected to a keyboard 17 via the I2C bus 16. The keyboard (KB) 17 is an input device serving as a user interface for the personal computer 1.

The hardware configuration of the access point (AP) 2 is shown in FIG. 2.

In the access point (AP) 2, the CPU 23 not only supervises the entire control of the access point (AP) 2 but also performs relay control of the network. The memory 24 holds communication data and programs.

A flash ROM 25 is a device that stores various pieces of data. In each of the embodiments, the appropriate configuration information (ACI) for communication applications provided by the ISP is written into the flash ROM 25 and used for the personal computer (PC) 1 to communicate via the network.

The LAN controller 26 is a network controller compatible with 10Base-T and 100Base-T connections as determined in the IEEE 802.3 standard. The LAN controller 26 performs transmission/reception control of data.

An Asymmetric Digital Subscriber Line (ADSL) controller 27, which is an ADSL access controller, modulates and demodulates a signal. In the upstream data communication from the user to the provider, data can be transferred at a maximum speed of about 2 Mbps. In the downstream data communication from the provider to the user, data can be transferred at a maximum speed of about 12 Mbps.

A wireless LAN module 28, which has the same function as that of the wireless LAN module 10 of the personal computer (PC) 1, establishes wireless communication with the wireless LAN module 10 of the personal computer (PC) 1.

In the embodiment, it is assumed that connection with the external network is made via ADSL. Of course, the present invention is not limited to this. For instance, a conventional cable modem or FTTH (Fiber To The Home) may be used.

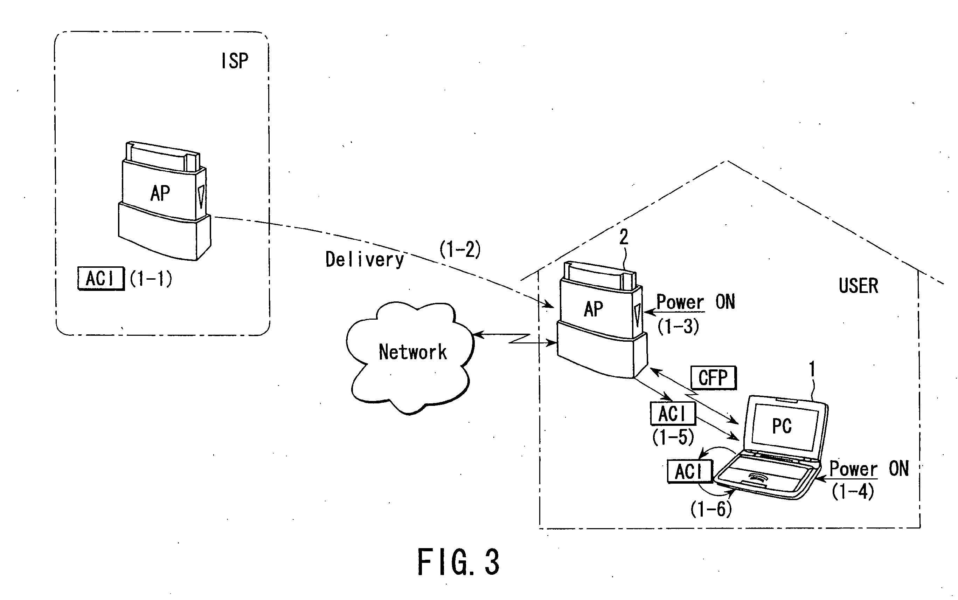

Referring to FIGS. 3 to 10, the first to fourth embodiments of the present invention will be explained.

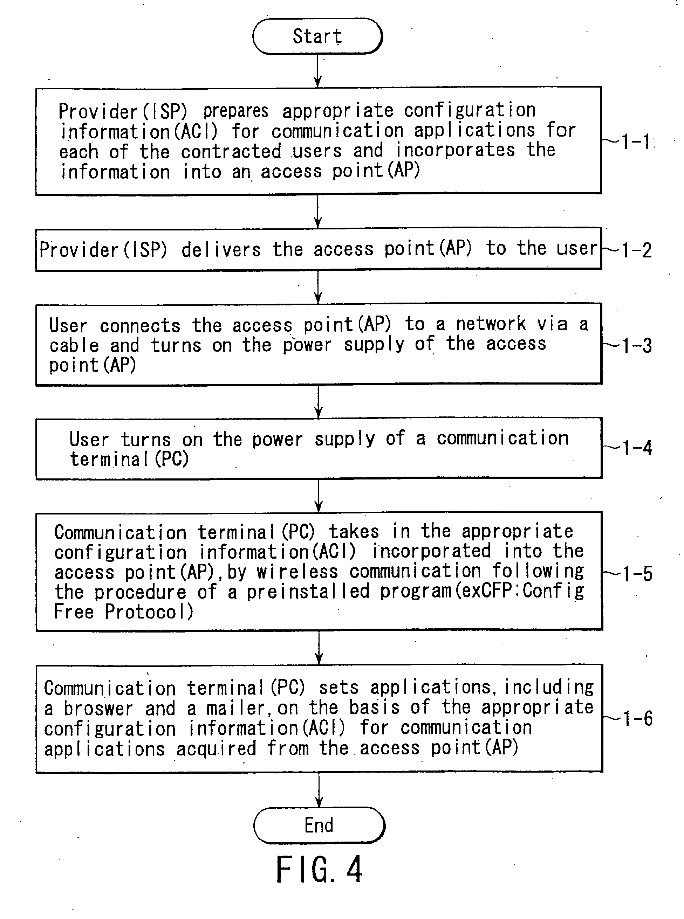

First, the first embodiment of the invention will be explained by reference to FIGS. 3 and 4.

The Internet service provider (ISP) with which users have made a contract prepares appropriate configuration information (ACI) for communication applications for each of the contracted users and incorporates the information (ACI) into an access point (AP) 2. For example, the information (ACI) is written into the flash ROM 25 of the access point (AP) 2 (step 1-1).

The ISP delivers to the user the access point (AP) 2 into which the appropriate configuration information (ACI) has been incorporated (step 1-2).

The user connects the access point (AP) 2 to the network via a cable and then turns on the power supply of the access point (AP) 2 (step 1-3). Then, the user turns on the power supply of, for example, the personal computer (PC) 1 used as a communication terminal (step 1-4).

Following the procedure of a preinstalled program (e.g. CFP:config free protocol), the personal computer (PC) 1 takes in the appropriate configuration information (ACI) for communication applications incorporated into the access point (AP) 2 through the above-described wireless communication (step 1-5).

Further following the procedure of the preinstalled program (CFP), the personal computer (PC) 1 sets applications, including a browser and a mailer, on the basis of the appropriate configuration information (ACI) acquired from the access point (AP) 2 (step 1-6).

While in the embodiment, the appropriate configuration information (ACI) for communication applications incorporated into the access point (AP) 2 is taken in by the wireless communication following the procedure of the preinstalled program (CFP), the ISP may deliver to the user the program (CFP) together with the access point (AP) 2 in the form of a storage medium and ask the user to install them into the user's personal computer (PC) 1.

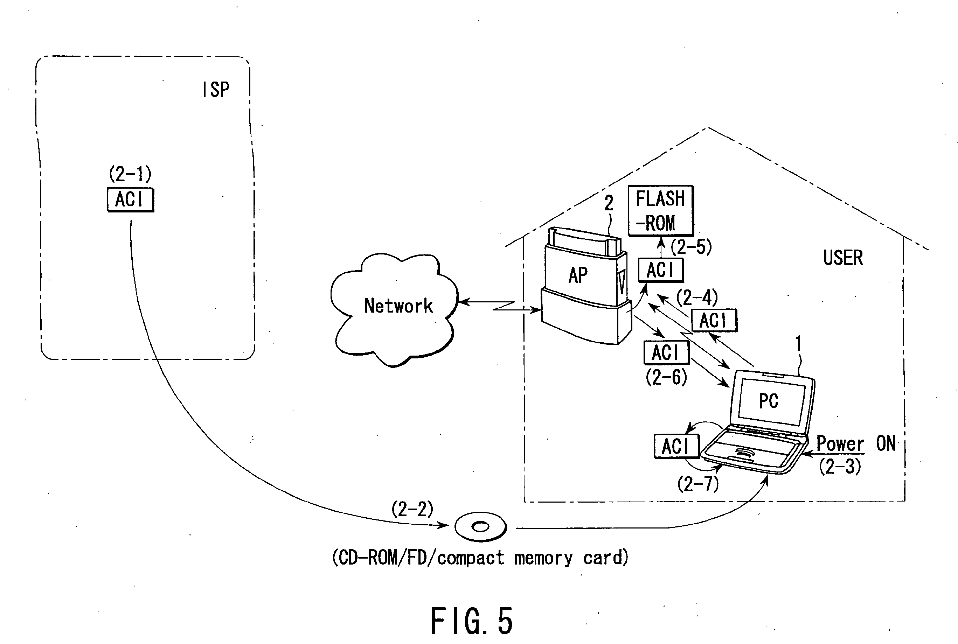

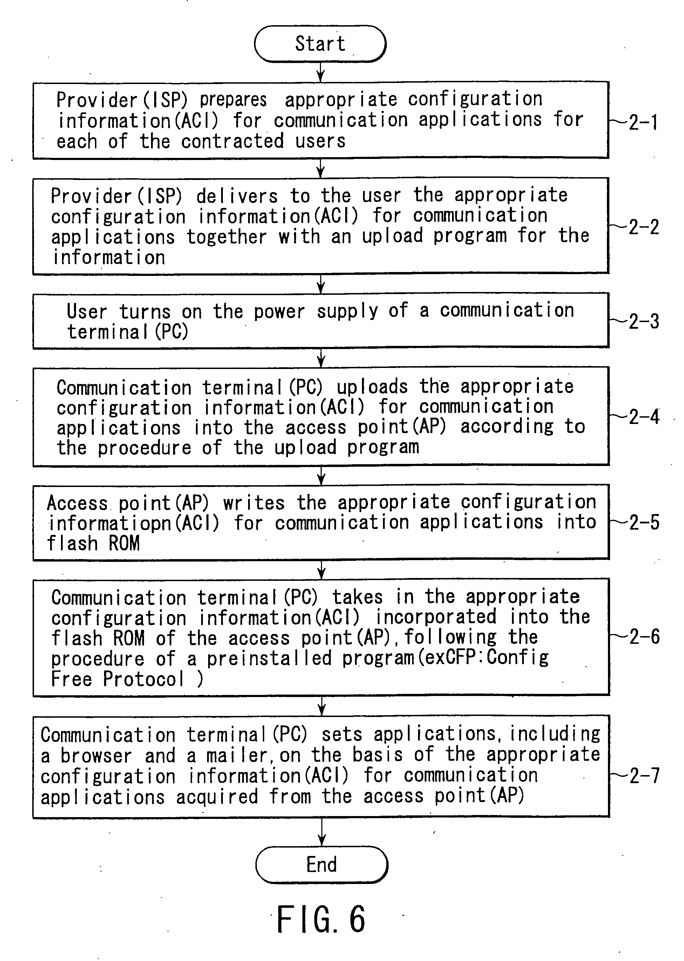

Next, the second embodiment of the present invention will be explained by reference to FIGS. 5 and 6.

An ISP with which users have made a contract prepares appropriate configuration information (ACI) for communication applications for each of the contracted users (step 2-1).

The ISP writes the prepared appropriate configuration information (ACI) for communication applications into a specific storage medium, such as, a CD-ROM, a floppy disk, or a compact memory card, and delivers the medium to the user (step 2-2).

After receiving from the ISP the medium in which the appropriate configuration information (ACI) for communication applications has been stored, the user turns on, for example, the power supply of the personal computer (PC) 1 used as a communication terminal (step 2-3).

After the power supply is turned on, the personal computer (PC) 1 executes the preinstalled program (CFP) and uploads the appropriate configuration information (ACI) for communication applications stored on the medium into the access point (AP) 2 by wireless communication (step 2-4).

The access point (AP) 2 writes the appropriate configuration information (ACI) for communication applications received through the wireless communication into the flash ROM 25 (step 2-5).

Following the procedure of the preinstalled program (CFP), the personal computer (PC) 1 takes in the appropriate configuration information (ACI) for communication applications incorporated into the access point (AP) 2 through the above-described wireless communication (step 2-6).

On the basis of the appropriate configuration information (ACI) for communication applications acquired from the access point (AP) 2 through the wireless communication, the personal computer (PC) 1 sets applications, including a browser and a mailer (step 2-7).

While in the second embodiment, the appropriate configuration information (ACI) for communication applications incorporated into the access point (AP) 2 is taken in through the wireless communication following the procedure of the preinstalled program (CFP), the ISP may deliver to the user not only a medium on which the program (CFP) has been stored but also a medium on which the appropriate configuration information (ACI) for communication applications has been stored and ask the user to install the program (CFP) into the user's personal computer (PC) 1.

In the case where the ISP has means for reading . the data from the storage medium, the access point (AP) 2 may read the data directly from the storage medium and write the appropriate configuration information (ACI) for applications into the flash ROM 25.

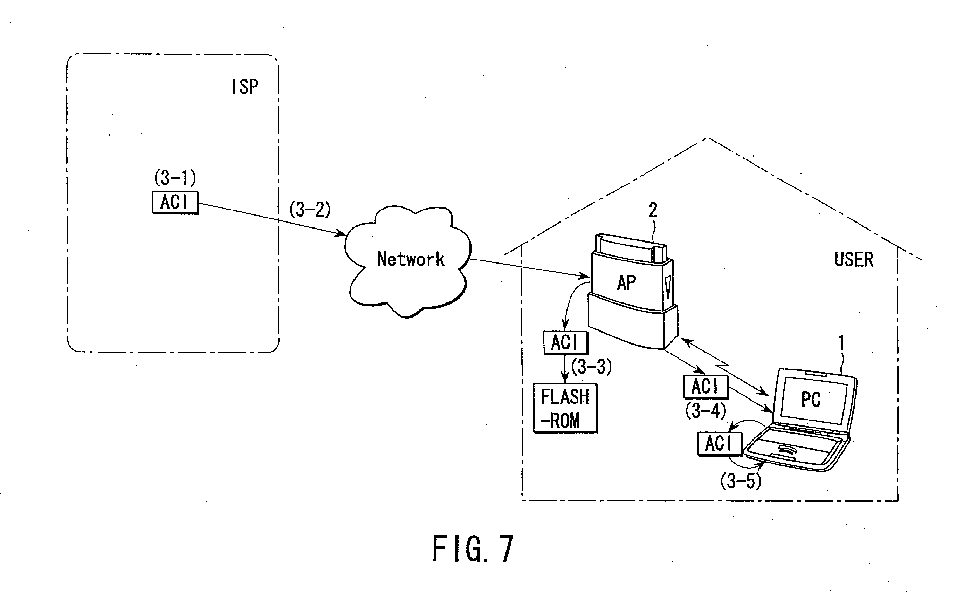

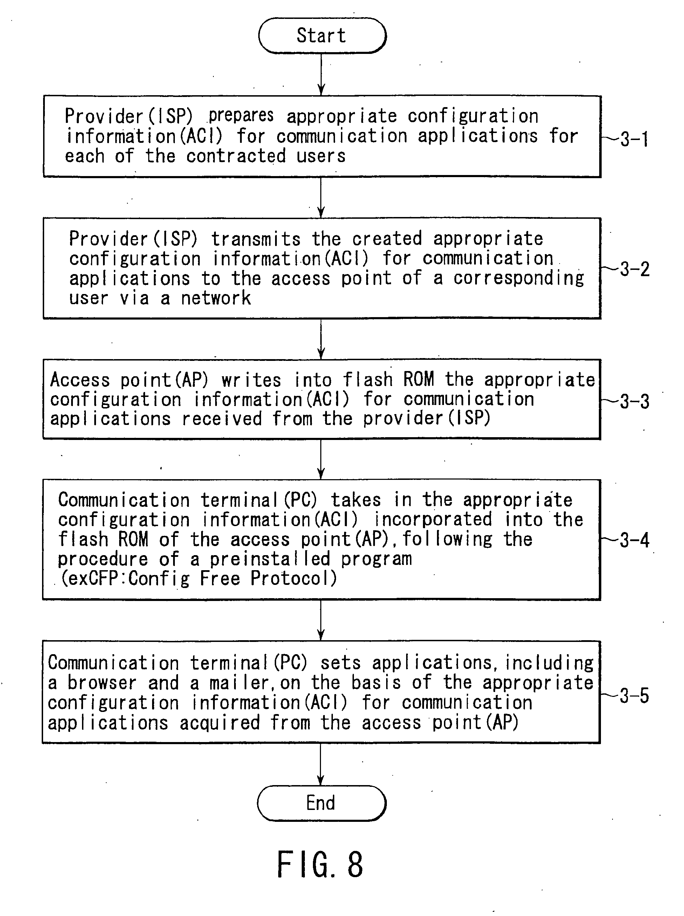

Next, the third embodiment of the present invention will be explained by reference to FIGS. 7 and 8.

An ISP with which users have made a contract prepares appropriate configuration information (ACI) for communication applications for each of the contracted users (step 3-1).

The ISP transmits the prepared appropriate configuration information (ACI) for communication applications to the access point (AP) 2 for the corresponding user via the network (step 3-2).

The access point (AP) 2 writes the appropriate configuration information (ACI) for communication applications received from the ISP into the flash ROM 25 (step 3-3).

For example, the personal computer (PC) 1 used by the user as a communication terminal takes in the appropriate configuration information (ACI) for communication applications incorporated into the flash ROM 25 of the access point (AP) following the procedure of the preinstalled program (CFP) (step 3-4).

On the basis of the appropriate configuration information (ACI) for communication applications acquired from the access point (AP) 2 through the wireless communication, the personal computer (PC) 1 sets applications, including a browser and a mailer (step 3-5).

In the third embodiment, the timing with which the ISP transmits the prepared appropriate configuration information (ACI) for communication applications to the corresponding user via the network (step 3-2) may be the time when the access point (AP) 2 responds in a case where the ISP accesses the access point (AP) 2 at specific intervals of time after making a contract with the user, the time when the access point (AP) 2 makes a request to the ISP via the network at the time of start-up, or the time when the user makes a request using any transmission means.

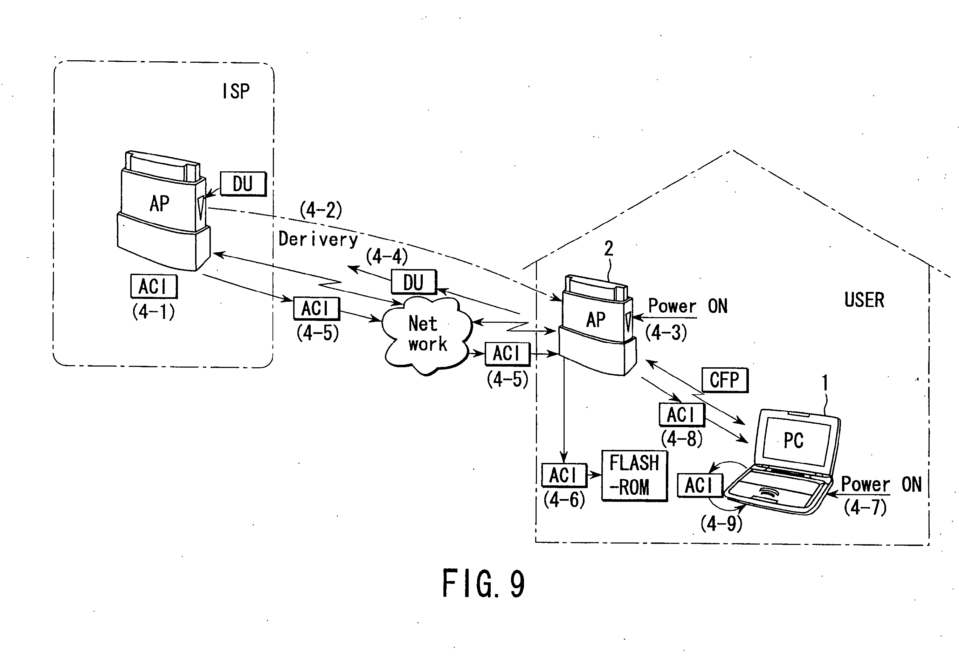

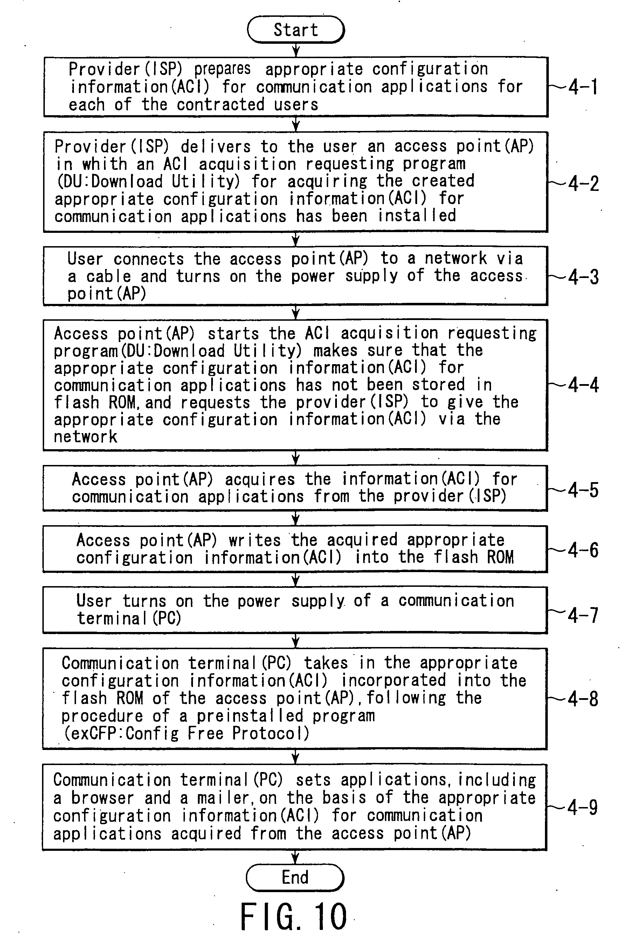

Next, the fourth embodiment of the present invention will be explained by reference to FIGS. 9 and 10.

The ISP with which users have made a contract prepares appropriate configuration information (ACI) for communication applications for each of the contracted users and stores the information in, for example, a specific server (step 4-1).

The ISP delivers to the user an access point (AP) 2 in which an ACI acquisition requesting program (DU:download utility) for acquiring the prepared appropriate configuration information (ACI) for communication applications has been preinstalled (step 4-2).

The user connects the access point (AP) 2 delivered from the ISP to a network via a cable and turns on the power supply of the access point (AP) 2 (step 4-3).

After the power supply is turned on, the access point (AP) 2 starts the ACI acquisition requesting program (DU), makes sure that the appropriate configuration information (ACI) for communication applications has not been stored in the flash ROM 25, and requests the ISP to give the appropriate configuration information (ACI) via the network (step 4-4).

After confirming the reception of the request from the ISP, the access point (AP) 2 acquires the appropriate configuration information (ACI) for communication applications from the ISP (step 4-5).

The access point (AP) 2 writes into the flash ROM 25 the appropriate configuration information (ACI) for communication applications acquired from the ISP (step 4-6).

The user turns on, for example, the personal computer (PC) 1 used as a communication terminal (step 4-7).

Following the procedure of the preinstalled program (CFP), the personal computer (PC) 1 takes in the appropriate configuration information (ACI) for communication applications incorporated into the flash ROM 25 of the access point (AP) 2 (step 4-8).

On the basis of the appropriate configuration information (ACI) for communication applications acquired from the access point (AP) 2, the personal computer (PC) 1 sets applications, including a browser and a mailer (step 4-9).

While in the fourth embodiment, the access point (AP) 2 in which an ACI acquisition requesting program (DU) for acquiring the appropriate configuration information (ACI) for communication applications prepared by the ISP has been installed is delivered to the user, this invention is not limited to this. For instance, the ISP may transmit directly to the user an ACI acquisition requesting program (DU) for acquiring the appropriate configuration information (ACI) for communication applications prepared by the ISP. Alternatively, the ISP may store the ACI acquisition requesting program (DU) into a storage medium, deliver to the.user the medium into which the ACI acquisition requesting program (DU) has been stored, and ask the user to upload the ACI acquisition requesting program (DU) stored on the medium into the access point (AP) 2 via the personal computer (PC) 1. Alternatively, the ISP may deliver to the user a medium in which the ACI acquisition requesting program (DU) and the above program (CFP) have been stored, thereby realizing the function of the fourth embodiment.

## Claims

1. A method of setting up a network configuration information for a user to connect a user's terminal to a network, **characterized by** comprising:
a step (1-1) of preparing said appropriate configuration information for each user;
a step (1-1) of storing said prepared appropriate configuration information into a storage unit included in said relay unit; and
a step (1-2) of delivering to each user said relay unit in which said appropriate configuration information is stored.

2. A method of setting up a network configuration information for a user to connect a user's terminal to a network, **characterized by** comprising:
a step (2-1) of preparing said appropriate configuration information for each user;
a step (2-1) of storing said prepared appropriate configuration information and an upload program that upload the appropriate configuration information to the relay unit into a portable storage medium; and
a step (2-2) of delivering to each user said storage medium in which said appropriate configuration information is stored.

3. A method of setting up a network configuration information for a user to connect a user's terminal to a network, **characterized by** comprising:
a step (3-1) of preparing said appropriate configuration information for each user; and
a step (3-2) of transferring said prepared appropriate configuration information to said relay unit of each user via a network.

4. A method of setting up a network configuration information for a user to connect a user's terminal to a network, **characterized by** comprising:
a step (4-1) of preparing said appropriate configuration information for each user and storing the information into a storage medium included in said server unit;
a step (4-2) of storing into a storage unit included in said relay unit an install program that acquiring the appropriate configuration information stored in said server unit via a network and executes the appropriate configuration by using the acquired appropriate configuration information; and
a step (4-2) of delivering to each user said relay unit in which said install program is stored.

5. A method of setting up a network configuration information for a user to connect a user's terminal to a network, **characterized by** comprising:
a step (1-1) of preparing the configuration information for a user to connect a user's terminal to a network;
a step (1-1) of storing said configuration information into a storage unit provided into said relay unit;
a step (1-2) of delivering the relay unit in which said configuration information is stored to each user; and
a step (1-6) of setting up the user's terminal based on the contents of said configuration information stored in the relay unit.
